(19) Europäisches Patentamt
European Patent Office
Office européen des brevets

(11) **EP 4 559 675 A1**

(12) **EUROPEAN PATENT APPLICATION**
published in accordance with Art. 153(4) EPC

(43) Date of publication:
**28.05.2025   Bulletin 2025/22**

(51) International Patent Classification (IPC):
***B32B 27/00*** (2006.01)      ***B32B 27/30*** (2006.01)
***E04F 13/07*** (2006.01)      ***E04F 13/18*** (2006.01)

(21) Application number: **23843019.3**

(22) Date of filing: **19.07.2023**

(52) Cooperative Patent Classification (CPC):
**B32B 27/00; B32B 27/30; E04F 13/07; E04F 13/18**

(86) International application number:
**PCT/JP2023/026471**

(87) International publication number:
**WO 2024/019096 (25.01.2024 Gazette 2024/04)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:   **20.07.2022   JP 2022115514**

(71) Applicant: **Toppan Holdings Inc.
Tokyo 110-0016 (JP)**

(72) Inventor: **YAMASAKI Yoshimi
Tokyo 110-0016 (JP)**

(74) Representative: **TBK
Bavariaring 4-6
80336 München (DE)**

(54) **DECORATIVE SHEET AND METHOD FOR MANUFACTURING DECORATIVE SHEET**

(57)     There is provided a decorative sheet having not only low gloss and good aesthetic properties, but also fingerprint resistance, high durability and processability, and water resistance. For this purpose, in the decorative sheet, a primary film layer (2), a water-resistant protective layer (9), and a surface protective layer (5) are laminated in this order; the surface protective layer (5) has a surface on which asperities having ridge portions (5B) protruding in a ridge-like shape are formed; in the asperities of the surface protective layer (5), a ratio RSm/Ra between the surface roughness index RSm and the surface roughness index Ra is in the range of 10 or more and 300 or less; the surface protective layer (5) comprises an ionizing radiation curable resin as a main material; the ionizing radiation curable resin comprises a trifunctional acrylic resin with a repeating structure as a main component; and the number of repetitions of the repeating structure is 3 or greater.

FIG.1

**Description**

[Technical Field]

The present invention relates to decorative sheets used for surface decoration or the like of building interiors and exteriors, fixtures, furniture, construction materials, flooring materials, etc., and methods of producing decorative sheets.

[Background Art]

Decorative sheets are commonly used in buildings as mentioned above to impart aesthetic properties or durability to the surfaces of wood, wood boards, metal plates, non-flammable boards, paper substrates, or resin substrates by bonding the decorative sheets thereto via an adhesive or the like for formation of decorative panels.

To impart aesthetic properties, patterns such as wood grain and stone grain that are formed using various printing methods, or plain surfaces with no patterns are selected according to needs and applications. Similarly, surface gloss is also an important factor of aesthetic properties, and is selected from variety of glow levels from mirror-like high gloss to low gloss with no reflections, according to needs and applications.

As mentioned above, imparting durability is an important function of decorative sheets, in addition to imparting aesthetic properties. Durability refers to an overall evaluation of scratch resistance or stain resistance, and for whether these properties can be maintained over a long period of time. Needs for decorative sheets may vary depending on the environments or situations in which they are used, but decorative sheets with high performance are always in need.

To impart durability, a surface protective layer is formed, in general, on the outermost surface of decorative sheets. To adjust the gloss mentioned above, or to achieve low gloss in particular, it is common to add a matting agent (matting additive) to the surface protective layer.

Furthermore, decorative sheets are preferred to have processability such that they can withstand such processes as cutting and bending which are generally performed for forming decorative panels or decorative materials.

In addition, decorative sheets are required to be water resistant to prevent deterioration due to penetration of water through the surfaces thereof when used in wet areas.

PTL 1, for example, proposes a decorative sheet taking into consideration of aesthetic properties (low gloss), scratch resistance, and stain resistance.

[Citation List]

[Patent Literature]

PTL 1: JP2019-119138 A

[Summary of Invention]

[Technical Problem]

In recent years, due to expansion in application of decorative panels using decorative sheets, and due to consumers' increasing awareness of quality, decorative sheets are required to have low gloss, fingerprint resistance, scratch resistance, stain resistance, and bending formability. Furthermore, when used in wet areas such as kitchens, toilets, modular baths, bathroom vanities, and window frames, decorative sheets are required to have water resistance.

Of the above needs, low gloss can be achieved using a method of adding a high-concentration matting agent for roughening the surfaces, but adding a large amount of this agent causes the following problems.

(1) Fingerprint stains become difficult to remove, resulting in reduced fingerprint resistance.

(2) The matting agent is unavoidably lost in scratch resistance testing, resulting in reduced scratch resistance.

(3) Stains become difficult to remove, resulting in reduced stain resistance.

(4) The matting agent causes whitening during bending, resulting in reduced bending formability.

In order to impart water resistance, there is a method of adding a highly cross-linked component as a subcomponent to the surface protective layer, but adding a large amount of this component causes the following problems.

(1) The ridge-like asperities become rougher, resulting in increased gloss.

(2) Hardness is increased by the highly cross-linked component, resulting, on the other hand, in reduced bending formability accordingly.

In order to solve the issues set forth above, the present invention aims to provide a decorative sheet having good aesthetic properties with low gloss, and having fingerprint resistance, high durability (scratch resistance or stain resistance in particular), high processability, and water resistance.

[Solution to Problem]

The present inventor has conducted repeated experiments to optimize the asperities of the surface protective layer for achievement of low gloss, and to find the necessary structural elements for the materials used for the surface protective layer, and has found that there can be provided a decorative sheet exhibiting low gloss, and having fingerprint resistance, high durability (scratch resistance and stain resistance in particular), high processability, and water resistance.

In a decorative sheet according to an aspect of the present invention, a primary film layer, a water-resistant protective layer, and a surface protective layer are laminated in this order; the surface protective layer has a surface on which asperities having ridge portions protruding in a ridge-like shape are formed; in the asperities of the surface protective layer, a ratio RSm/Ra between a surface roughness index RSm and a surface roughness index Ra is in a range of 10 or more and 300 or less; the surface protective layer comprises an ionizing radiation curable resin as a main material; the ionizing radiation curable resin comprises a trifunctional acrylic resin with a repeating structure as a main component; and the number of repetitions of the repeating structure is 3 or greater.

In a method of producing a decorative sheet according to another aspect of the present invention, which is a method of producing the decorative sheet according to the above aspect, a surface protective layer having ridge portions protruding in a ridge-like shape is formed by irradiating a surface of an applied ionizing radiation curable resin with light having a wavelength of 200 nm or less, and then irradiating the surface with ionizing radiation or UV light having a wavelength longer than that of the light having a wavelength of 200 nm or less.

[Advantageous Effects of the Invention]

According to an aspect of the present invention, there can be provided a decorative sheet exhibiting low gloss, fingerprint resistance, scratch resistance, stain resistance, bending formability, and water resistance.

[Brief Description of Drawings]

Fig. 1 is a schematic cross-sectional view illustrating an example of a decorative sheet according to an embodiment of the present invention.

Fig. 2 is a schematic cross-sectional view illustrating an example of a surface protective layer of a decorative sheet according to an embodiment of the present invention.

Fig. 3 is an image in plan view showing an example of a surface protective layer of a decorative sheet according to an embodiment of the present invention.

Fig. 4 is a schematic cross-sectional view illustrating a cross section of ridge portions according to an embodiment of the present invention.

Fig. 5 is a set of schematic diagrams illustrating intensity change with time of types of irradiation light in the processes of producing a decorative sheet according to an embodiment of the present invention.

[Description of Embodiments]

Referring to the drawings, a configuration of a decorative sheet according to an embodiment of the present invention will be described.

The drawings are only schematic, and the relationship between the thickness and planar dimensions, the thickness ratio between layers, and the like are not to scale. The embodiments are only configuration examples for embodying the technical ideas of the present invention, and the technical ideas of the present invention may undergo various modifications within the technical scope defined by the claims.

(Configuration)

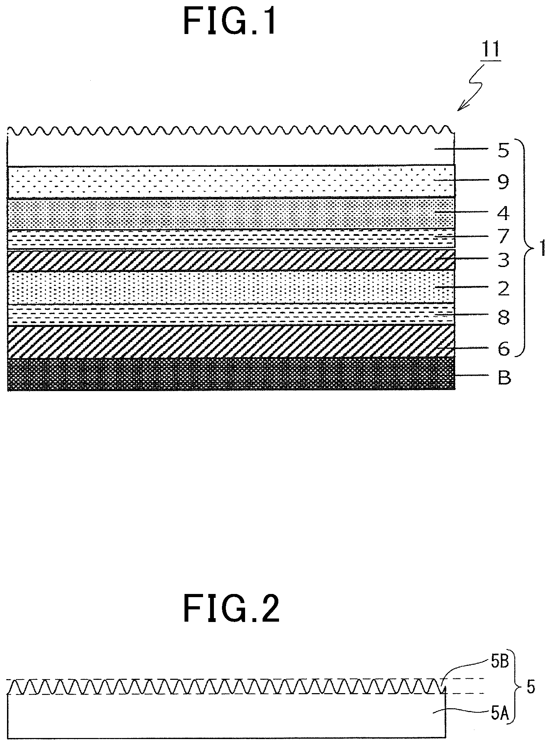

As shown in Fig. 1, a decorative sheet 1 according to the present embodiment includes a pattern layer 3, an adhesive layer 7 (e.g., thermal adhesive layer, anchor coat layer, and dry lamination adhesive layer), a transparent resin layer 4, a water-resistant protective layer 9, and a surface protective layer 5 laminated in this order on a front surface, or one surface, of a primary film layer (base material layer) 2. Also, a concealing layer 8 and a primer layer 6 are provided in this order on a rear surface, or the other surface, of the primary film layer 2. The pattern layer 3, adhesive layer 7, transparent resin layer 4, concealing layer 8, or the primer layer 6 does not have to be necessarily provided.

As shown in Fig. 1, the decorative sheet 1 according to an embodiment of the present invention is bonded to a substrate B to constitute a decorative material 11. Although not specifically limited, the substrate B may be constituted, for example, of a wood board, inorganic board, metal plate, composite board made of multiple materials, etc.

<Primary film layer 2>

The primary film layer 2 may be made of any material selected, for example, from paper, synthetic resins, synthetic resin foam, rubber, non-woven fabric, synthetic paper, metal foil, etc. Examples of the paper include tissue paper, titanium paper, and resin-impregnated paper. Examples of the synthetic resins include polyethylenes, polypropylenes, polybutylenes, polystyrenes, polycarbonates, polyesters, polyamides, ethylene-vinyl acetate copolymers, polyvinyl alcohols, and acrylic resins. Examples of the rubber include ethylene-propylene copolymer rubber, ethylene-propylene-diene copolymer rubber, styrene-butadiene copolymer rubber, styrene-isoprene-styrene block copolymer rubber, styrene-butadiene-styrene block copolymer rubber, and polyurethane. As the non-woven fabric, organic or inorganic non-woven fabric can be used. Examples of the metal used for the metal foil include aluminum, iron, gold, and silver.

If an olefin resin is used as the primary film layer 2, the primer layer 6 is preferred to be provided between the primary film layer 2 and the substrate B because the surface of the primary film layer 2 is often in an inactive state. In addition, in order to improve adhesion between the primary film layer 2 made of an olefin material and the substrate B, the primary film layer 2 may be subjected to a surface modification treatment such as corona treatment, plasma treatment, ozone treatment, electron beam treatment, UV treatment, and dichromate treatment.

The primer layer 6 may be made of the same material as the pattern layer 3 described later. Considering that the decorative sheet 1 is taken up in a web form, the primer layer 6, which is provided to the rear surface of the decorative sheet 1, may additionally contain an inorganic filler to avoid blocking and improve adhesion to the adhesive. Examples of the inorganic filler include silica, alumina, magnesia, titanium oxide, and barium sulfate.

Considering printability, costs, and the like, the primary film layer 2 is preferred to have a thickness of 20 $\mu$m or more and 250 $\mu$m or less.

<Pattern layer 3>

The pattern layer 3 is a layer of patterns provided to the primary film layer 2 using an ink. The ink binder may be an appropriately selected one of, for example, nitrocellulose binders, cellulose binders, vinyl chloride-vinyl acetate copolymer binders, polyvinyl butyral binders, polyurethane binders, acrylic binders, and polyester binders, or modified products thereof. The binder may be any of aqueous, solvent, and emulsion types, and may be of a one-part type or a two-part type that uses a curing agent. Furthermore, in a method used, a curable ink may be irradiated with UV light, electron beams, or the like for curing. The most common method among these is to use a urethane ink which is cured with an isocyanate. Other than binders, a coloring agent such as a pigment and dye, an extender pigment, solvent, and various additives contained in generally used inks may be added to the pattern layer 3. Examples of highly versatile pigments include condensed azo pigments, insoluble azo pigments, quinacridone, isoindoline, anthraquinone, imidazolone, cobalt, phthalocyanine, carbon, titanium oxide, iron oxide, pearl pigments of mica, and the like.

Separate from applying an ink, various metals can be vapor-deposited or sputtered to provide patterns to the pattern layer 3. Specifically, a light stabilizer is preferred to be added to the ink, as this can suppress deterioration of the decorative sheet 1 itself caused by photodegradation of the ink and can extend the life of the decorative sheet 1.

<Adhesive layer 7>

The adhesive layer 7 is a layer referred to as a thermal adhesive layer, anchor coat layer, or dry lamination adhesive layer.

The resin material for the adhesive layer 7 is not specifically limited, but can be appropriately selected, for example, from acrylic resins, polyester resins, polyurethane resins, epoxy resins, etc. Also, as the resin material for the adhesive layer 7, for example, an ethylene-vinyl acetate copolymer resin adhesive can also be used. An application method can be appropriately selected depending on the viscosity or the like of the adhesive; however, gravure coating is used in general. After being applied to the upper surface of the pattern layer 3 by gravure coating, the adhesive layer 7 is laminated to the transparent resin layer 4. If a sufficient adhesive strength is obtained between the transparent resin layer 4 and the pattern layer 3, the adhesive layer 7 may be omitted.

<Transparent resin layer 4>

As the resin material for the transparent resin layer 4, an olefin resin is preferred to be used. Examples of the olefin resin include, besides polypropylenes, polyethylenes, polybutenes, and the like, homopolymers of an $\alpha$-olefin or copolymers of one or more $\alpha$-olefins (e.g., propylene, 1-butene, 1-pentene, 1-hexene, 1-heptene, 1-octene, 1-nonene, 1-decene, 1-undecene, 1-dodecene, tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-pentene, 4-ethyl-1-hexene, 3-ethyl-1-hexene, 9-methyl-1-decene, 11-methyl-1-dodecene, 12-ethyl-1-tetradecene, etc.), and copolymers of ethylene or an $\alpha$-olefin with other monomers, such as an ethylene-vinyl acetate copolymer, ethylene-vinyl alcohol copolymer, ethylene-methyl methacrylate copolymer, ethylene-ethyl methacrylate copolymer, ethylene-butyl methacrylate copolymer, ethylene-methyl acrylate copolymer, ethylene-ethyl acrylate copolymer, and ethylene-butyl acrylate copolymer.

In order to improve the surface strength of the decorative sheet 1, a highly crystalline polypropylene is preferred to be used as the transparent resin layer 4. As necessary, the transparent resin layer 4 may additionally contain various additives such as a thermal stabilizer, photostabilizer, anti-blocking agent, catalyst scavenger, coloring agent, light scattering agent, and matting agent. Generally, phenol-, sulfur-, phosphorus-, and hydrazine-based thermal stabilizers, and hindered amine-based light stabilizers are added in any combination.

<Water-resistant protective layer 9>

The resin material of the water-resistant protective layer 9 is not specifically limited. For example, an ionizing radiation curable resin or thermosetting resin is preferred to be used.

The ionizing radiation curable resin may be a known resin material, including various monomers and commercially available oligomers. For example, it is preferred to use polyfunctional monomers such as pentaerythritol triacrylate (PET3A), pentaerythritol tetraacrylate (PET4A), trimethylolpropane triacrylate (TMPTA), and dipentaerythritol hexaacrylate (DPHA), polyfunctional oligomers such as Shikoh UV-1700B (manufactured by Nippon Synthetic Chemical Industry Co., Ltd.), or mixtures thereof.

The thermosetting resin is preferred to be formed, for example, by heating and curing together a polymer containing the carboxyl group described below, and an epoxy compound or carbodiimide compound. The polymer containing the carboxyl group, whose use is not specifically limited, may be used, for example, to impart mechanical properties to the layer such as by elongation of the molecular structure, and may be appropriately selected from, for example, various acrylic polymers, various polyesters, various polyethers, various polycarbonates, various polyurethanes, and the like.

An epoxy group is a general term for compounds having a three-membered ether ring, i.e., oxacyclopropane (oxirane), in their structural formula. They have good reactivity and are used for a variety of purposes. Epoxy compounds have an effect of inhibiting hydrolysis, a major issue for most general-purpose resins, by trapping the acid in a polymer acting as a catalyst for the decomposition reaction, and are therefore effective for improving water resistance. The epoxy compound is not specifically limited, similarly to the above, but examples thereof include sorbitol polyglycidyl ether, glycerol polyglycidyl ether, diglycerol polyglycidyl ether, polyglycerol polyglycidyl ether, trimethylolpropane polyglycidyl ether, pentaerythritol polyglycidyl ether, cresol novolac epoxy emulsion, polyethylene glycol diglycidyl ether, polypropylene glycol diglycidyl ether, resorcinol diglycidyl ether, neopentyl glycol diglycidyl ether, 1,6-hexanediol diglycidyl ether, hydrogenated bisphenol A diglycidyl ether, terephthalic acid diglycidyl ester, phthalic acid diglycidyl ester, hydrogenated phthalic acid diglycidyl ester, 2-ethylhexyl glycidyl ether, phenyl glycidyl ether, phenol (EO)5 glycidyl ether, p-tert-butylphenyl glycidyl ether, dibromophenyl glycidyl ether, lauryl alcohol (EO)16 glycidyl ether, C12, C13 mixed alcohol glycidyl ether, and N-glycidylphthalimide. An example of the major product of such carbodiimide compounds is DENACOL EX-830 manufactured by Nagase ChemteX Corporation.

A carbodiimide is a functional group represented by -N=C=N-, which has good reactivity and is used for various purposes. Carbodiimide compounds have an effect of inhibiting hydrolysis, similarly to epoxy compounds, by trapping the acid in a polymer acting as a catalyst for the decomposition reaction of the resin, and are therefore effective for improving water resistance. The carbodiimide compound, similarly to the above, is not specifically limited, but examples of which include diisopropylcarbodiimide, 1-ethyl-3-(3-dimethylaminopropyl)carbodiimide hydrochloride, N-3-dimethylaminopropyl-N'-ethylcarbodiimide, N-tert-butyl-N'-ethylcarbodiimide, N-cyclohexyl-N'-2-morpholinoethylcarbodiimide meso-p-toluenesulfonic acid, and N,N'-di-tert-butylcarbodiimide. An example of the major product of such carbodiimides compound is Carbodilite V-02-L2 manufactured by Nisshinbo Chemical Inc.

The resin constituting the water-resistant protective layer 9 of the present embodiment is preferred to be an acrylic copolymer having an acid value of 15 mg KOH/g or greater crosslinked with a curing agent. If the acid value is 15 mg KOH/g or less, the crosslink density after curing may be low, and water resistance may decrease.

The acrylic resin contained in the water-resistant protective layer 9 is preferred to be an aqueous emulsion. If the acrylic resin contained in the topcoat layer 15 is an aqueous emulsion, a resin coating with a high molecular weight may be obtained, improving water resistance.

The water-resistant protective layer 9 is preferred to have a thickness in the range of 2 $\mu$m or more and 10 $\mu$m or less. If the thickness is 2 $\mu$m or less, sufficient water resistance is not necessarily imparted. Since drying may be insufficient at a thickness of 10 $\mu$m or more in the case of using an aqueous emulsion, and since sufficient performance may be exhibited at a thickness of 10 $\mu$m or less, it is determined that no film thicker than this is necessary, considering costs.

<Surface protective layer 5>

The surface protective layer 5 includes a core portion 5A and ridge portions 5B protruding in a ridge-like shape from one surface of the core portion 5A. With this configuration, asperities are formed on the surface of the surface protective layer 5.

In the decorative sheet 1 according to the present embodiment, the term ridge-like refers to shapes which are elongated and raised, and continue linearly in plan view. The ridge portions 5B may be curved or straight in plan view, but are preferred to be curved from the perspective of fingerprint resistance of the surface of the decorative sheet 1. In the present disclosure, the ridge portions 5B refer to, for example, the portions from the lowest part to the tip of the asperities provided on the surface of the surface protection layer 5, and the core portion 5A refers to the portion of the surface protective layer 5 excluding the ridge portions 5B.

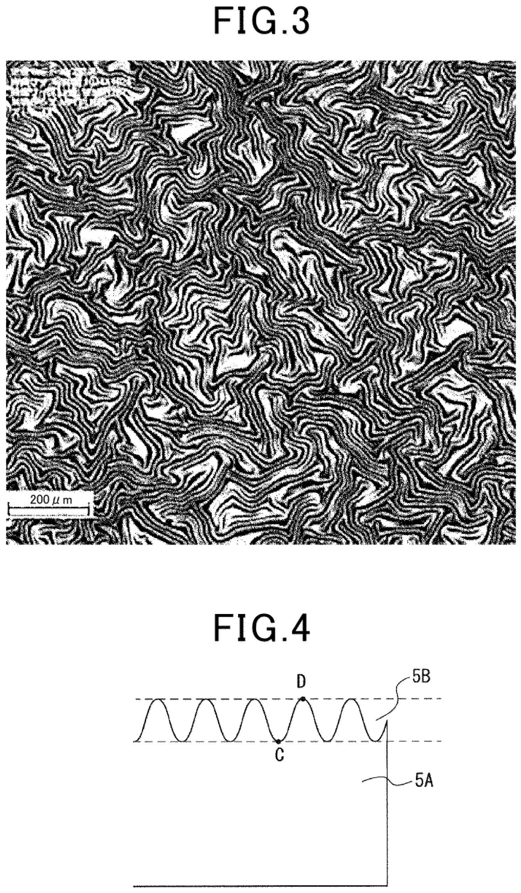

Fig. 2 is a schematic cross-sectional view illustrating a cross section of the ridge portions 5B of the surface protective layer 5 (cross section taken along the thickness direction of the surface protective layer 5), and Fig. 3 is an image in plan view showing the configuration of the surface of the surface protective layer 5. Fig. 3 is an image in plan view captured using a laser microscope (OLS-4000 manufactured by Olympus Corporation).

As in the image in plan view shown in Fig. 3, the ridge portions 5B are elongated and raised, and continue linearly in plan view. As will be described later, the ridge portions 5B are formed by irradiating the surface of an ionizing radiation curable resin with light of a specific wavelength to cause the surface of the ionizing radiation curable resin to shrink.

The shape of such ridge portions 5B can be expressed by a ratio RSm/Ra between a surface roughness index RSm ($\mu$m) in the horizontal direction (the direction parallel to the plane of the surface protective layer 5, i.e., the left-right direction in Fig. 2) and a surface roughness index Ra ($\mu$m) in the vertical direction (the depth direction of the ridge portions 5B or the thickness direction of the surface protective layer 5, i.e., the up-down direction in Fig. 2). It is preferred that the ratio RSm/Ra is 10 or more and 300 or less. It is more preferred that the ratio RSm/Ra is 10 or more and 250 or less. If the ratio RSm/Ra is less than 10, the ridge portions 5B may be excessively finely shaped, and therefore stains may become difficult to wipe off, resulting in poor stain resistance. If the ratio RSm/Ra is higher than 300, the ridge spacing may become excessively large, and therefore low gloss is not necessarily achieved.

The ratio RSm/Ra is more preferred to be 50 or more and 200 or less. If the ratio RSm/Ra is in this numerical range, the ridge spacing may become moderately wide, and therefore affinity for water or cleaning agents (water containing surfactants or alcohol) may be improved. Therefore, if the decorative sheet has the ratio RSm/Ra in this numerical range, even if the surface of the decorative sheet becomes contaminated, the contaminant can be easily wiped off with water or cleaning agents.

The ratio RSm/Ra is most preferred to be 80 or more and 150 or less. If the ratio RSm/Ra is in this numerical range, a commercially available cleaning sponge can easily penetrate between the ridges, and even if the surface of the decorative sheet becomes contaminated, the contaminant can be easily wiped off using a commercially available cleaning sponge.

Herein, Ra and RSm are values measured using a line roughness gauge (according to JIS B 0601).

The cross section of the ridge portions 5B taken along the thickness direction of the surface protective layer 5 may have a sinusoidal shape.

The sinusoidal shape herein refers to a shape, as shown in Fig. 4, in which the line from the lowest point C of the ridge portions 5B to the highest point (apex) D can be expressed as a sine wave.

The shape of the space (valley) between adjacent ridge portions 5B may be a concave curved shape. In other words, the lowest point C of the ridge portions 5B may be in a concave curved shape.

The mechanism by which the ridge portions 5B are formed will now be described.

When acrylate is irradiated with light having a wavelength of 200 nm or less as first irradiation light, the acrylate can be self-excited. Accordingly, by irradiating acrylate with light having a wavelength of 200 nm or less, the acrylate can be cross-linked. Light with a wavelength of 200 nm or less penetrates acrylate to a depth of about several tens to several hundreds of nm. Therefore, since only the surface is cross-linked with the area underneath fluid, wavy asperities resembling folded creases are produced.

Light with a wavelength of 200 nm or less is absorbed by oxygen in the atmosphere and significantly attenuated. Therefore, when processing acrylate, it is necessary to introduce nitrogen gas to control the reaction atmosphere. The residual oxygen concentration in the reaction atmosphere is preferred to be suppressed to 2,000 ppm or less. It is more preferred that the residual oxygen concentration in the reaction atmosphere is 1,000 ppm or less.

In order to produce asperities using the first irradiation light with a wavelength of 200 nm or less, the integrated intensity of the first irradiation light is preferred to be 0.5 $mJ/cm^2$ or more and 200 $mJ/cm^2$ or less. The integrated light intensity is more preferred to be 1 $mJ/cm^2$ or more and 100 $mJ/cm^2$ or less. The integrated light intensity is even more preferred to be 3 $mJ/cm^2$ or more and 50 $mJ/cm^2$ or less. The integrated light intensity is most preferred to be 5 $mJ/cm^2$ or more and 30 $mJ/cm^2$ or less. If the integrated light intensity is less than 0.5 $mJ/cm^2$, the curing shrinkage reaction may be weak and asperities are not necessarily sufficiently formed, and therefore gloss may not decrease. If the integrated light intensity is higher than 200 $mJ/cm^2$, the curing shrinkage reaction may become excessively strong, and therefore the surface conditions may be deteriorated.

The first irradiation light with a wavelength of 200 nm or less can be extracted from excimer VUV light. The excimer VUV light can be produced from a noble gas lamp or noble gas halide compound lamp. When electrons having high energy are externally applied to a lamp in which a noble gas or noble gas halide compound is sealed, a large quantity of discharge plasma (dielectric barrier discharges) is generated. The atoms in the discharged gas (noble gas) are excited by this plasma discharge and instantaneously brought into an excimer state. When returning from the excimer state to the ground state, light in the wavelength range specific to the excimer is emitted.

Any gas used in the conventional art can be used as the gas for the excimer lamp as long as the gas generates light with a wavelength of 200 nm or less. The gas may be a noble gas, such as Xe, Ar and Kr, or a mixed gas of a noble gas and a halogen gas, such as ArBr and ArF. The wavelength (center wavelength) of the excimer lamp depends on the gas. For example, the wavelength may be approximately 172 nm (Xe), approximately 126 nm (Ar), approximately 146 nm (Kr), approximately 165 nm (ArBr), and approximately 193 nm (ArF).

However, considering the magnitude of photon energy to be obtained or the difference between the wavelength and the binding energy of the organics, the light source to be used is preferred to be a xenon lamp emitting excimer light with a center wavelength of 172 nm. Also, considering the cost of maintaining the equipment, availability of materials, etc., a xenon lamp is preferred to be used as a light source.

Since the first irradiation light with a wavelength of 200 nm or less reaches only to a depth of about several tens to several hundreds of nm from the outermost surface of acrylate, the inside of the surface protective layer 5 having the ridge portions 5B formed by irradiation of light of 200 nm or less has fluidity, and thus further curing reaction has to be promoted. In order to cure the surface protective layer 5 after being irradiated with light of 200 nm or less, UV light can be used as second irradiation light, whose wavelength is longer than that of ionizing irradiation or the first irradiation light with a wavelength of 200 nm or less.

In the present embodiment, for example, following application of the second irradiation light, ionizing radiation whose type is different from the second irradiation light, or UV light whose wavelength is longer than that of the second irradiation light may be applied as third irradiation light; however, it is preferred to form the surface protective layer 5 having the ridge portions 5B by applying only the two types of light, i.e., the first irradiation light and the second irradiation light. The third irradiation light may be applied if the strength of the surface protective layer 5 is not sufficient by application of only the second irradiation light.

In order to cure the surface protective layer 5 entirely by applying the second irradiation light, the integrated light intensity of the second irradiation light is preferred to be 10 $mJ/cm^2$ or more and 500 $mJ/cm^2$ or less. The integrated light intensity is more preferred to be 50 $mJ/cm^2$ or more and 400 $mJ/cm^2$ or less. The integrated light intensity is even more preferred to be 100 $mJ/cm^2$ or more and 300 $mJ/cm^2$ or less. If the integrated light intensity is less than 10 $mJ/cm^2$, the curing reaction may be weak and sufficient strength cannot necessarily be imparted to the entire surface protective layer 5, and therefore scratch resistance may tend to be deteriorated. If the integrated light intensity is higher than 200 $mJ/cm^2$, the curing reaction may become excessively strong, and therefore the surface conditions may tend to be deteriorated.

The integrated light intensity of the second irradiation light is preferred to be higher than that of the first irradiation light. The integrated light intensity of the second irradiation light is preferred to be 1.1 times or more and 50.0 times or less, and more preferred to be 5.0 times or more and 30.0 times or less the integrated light intensity of the first irradiation light. If the integrated light intensity of the second irradiation light is less than 1.1 times the integrated light intensity of the first irradiation light, the curing reaction may be weak, and sufficient strength cannot be necessarily imparted to the entire surface protective layer 5. If the integrated light intensity of the second irradiation light exceeds 50.0 times the integrated light intensity of the first irradiation light, the curing reaction for the entire surface protective layer 5 may become excessively strong, and the shape of the ridge portions 5B may be deformed.

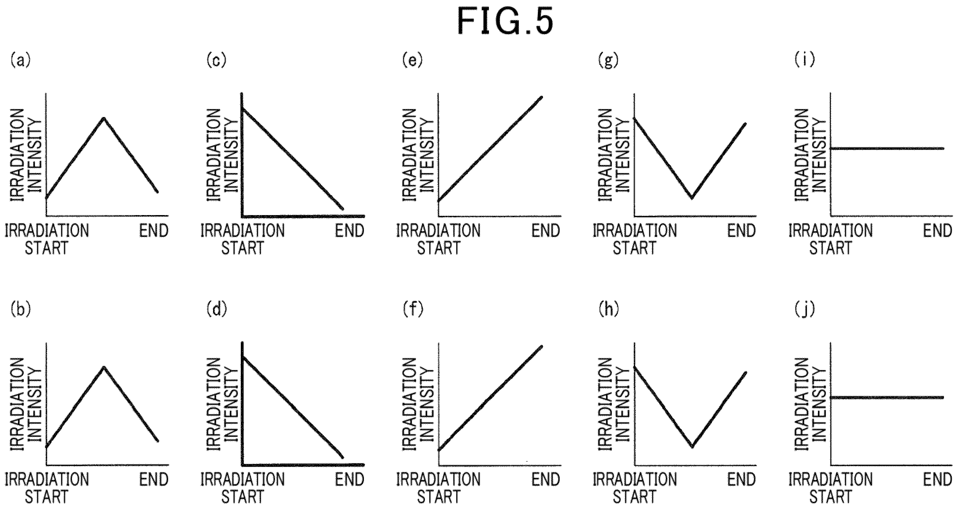

Referring now to Fig. 5, intensity change with time of the first irradiation light and intensity change with time of the second irradiation light will be described.

Fig. 5 is a set of schematic diagrams illustrating intensity change with time of the first irradiation light and intensity change with time of the second irradiation light.

Figs. 5(a), (c), (e), (g) and (i) are schematic diagrams illustrating intensity change with time of the first irradiation light. Figs. 5(b), (d), (f), (h) and (j) are schematic diagrams illustrating intensity change with time of the second irradiation light.

As shown in Fig. 5(a), the intensity of the first irradiation light may gradually increase with the lapse of irradiation time, and then may gradually decrease with the lapse of irradiation time. As shown in Fig. 5(c), the intensity of the first irradiation light may gradually decrease with the lapse of irradiation time. As shown in Fig. 5(e), the intensity of the first irradiation light may gradually increase with the lapse of irradiation time. As shown in Fig. 5(g), the intensity of the first irradiation light may gradually decrease with the lapse of irradiation time, and then may gradually increase with the lapse of irradiation time. As shown in Fig. 5(i), the intensity of the first irradiation light may be constant from the start to the end of irradiation.

As shown in Fig. 5(b), the intensity of the second irradiation light may gradually increase with the lapse of irradiation time, and then may gradually decrease with the lapse of irradiation time. As shown in Fig. 5(d), the intensity of the second irradiation light may gradually decrease with the lapse of irradiation time. As shown in Fig. 5(f), the intensity of the second irradiation light may gradually increase with the lapse of irradiation time. As shown in Fig. 5(h), the intensity of the second irradiation light may gradually decrease with the lapse of irradiation time, and then may gradually increase with the lapse of irradiation time. As shown in Fig. 5(j), the intensity of the second irradiation light may be constant from the start to the end of irradiation.

In the present embodiment, the patterns of the first irradiation light shown in Figs. 5(a), (c), (e), (g) and (i) may be appropriately combined with the patterns of the second irradiation light shown in Figs. 5(b), (d), (f), (h) and (j) and used. For example, the pattern of the first irradiation light shown in Fig. 5(a) may be combined with the pattern of the second irradiation light shown in Fig. 5(f). Alternatively, the pattern of the first irradiation light shown in Fig. 5(g) may be combined with the pattern of the second irradiation light shown in Fig. 5(f). If the ratio RSm/Ra is set to a value in the more preferred range of 10 or more and 300 or less, the pattern of the first irradiation light shown in Fig. 5(c) may be combined with the pattern of the second irradiation light shown in Fig. 5(f).

As described above, the ridge portions 5B formed by irradiation of light in the wavelength range of 200 nm or less have a finer structure compared to the asperities formed on the surface protective layer 5 through mechanical processing such as embossing. Forming such fine asperities on the surface of the surface protective layer 5, fingerprint resistance can be improved, while maintaining matte texture on the surface of the decorative sheet 1.

The surface protective layer 5 is preferred to have a thickness in the range of 2 $\mu$m or more and 20 $\mu$m or less. The surface protective layer 5 is more preferred to have a thickness in the range of 3 $\mu$m or more and 20 $\mu$m or less. The surface protective layer 5 is even more preferred to have a thickness in the range of 5 $\mu$m or more and 15 $\mu$m or less. The surface protective layer 5 is most preferred to have a thickness in the range of 5 $\mu$m or more and 12 $\mu$m or less. If the thickness of the surface protective layer 5 is less than 2 $\mu$m, the shaping effect of vacuum UV light does not necessarily penetrate deeply, and low gloss cannot be achieved. If the thickness of the surface protective layer 5 is greater than 20 $\mu$m, processability may be deteriorated and whitening may occur during bending.

In the thickness of the surface protective layer 5, the ratio between the thickness of the ridge portions 5B and the thickness of the core portion 5A (Thickness of ridge portions 5B / Thickness of core portion 5A) is preferred to be set in the range of 0.01 or more and 2.0 or less, and more preferred to be set in the range of 0.1 or more and 1.0 or less. The thickness of the surface protective layer 5 refers to the length of the surface protective layer 5 in the thickness direction from the point contacting the water-resistant protective layer 9 to the highest point of the asperities. The thickness of the ridge portions 5B refers to the length of the ridge portions 5B in the thickness direction from the lowest point of the asperities, i.e., the upper surface of the core portion 5A, to the highest point of the asperities.

The pattern layer 3 and the surface protective layer 5 can be formed, for example, using various printing methods, such as gravure printing, offset printing, screen printing, electrostatic printing, and ink-jet printing. Also, the surface protective layer 5, which covers the entire frontside surface of the primary film layer 2, can also be formed using various coating methods, such as roll coating, knife coating, micro gravure coating, and die coating. From these printing methods and coating methods, a method may be separately selected depending on the layer to be formed, or the same method may be selected to carry out collective processing.

The pattern layer 3 and the surface protective layer 5 may be coordinated from the perspective of aesthetic properties. If coordinated, gravure printing is preferred to be used because after forming the pattern layer 3, the surface protective layer 5 is required to be immediately formed. Gravure printing is also preferred to be used because it allows for relatively high speed printing and is advantageous in terms of costs. The term coordinated refers to that 50% or more, preferably 70% or more, and more preferably 90% or more of the surface protective layer 5 as formed overlaps with the patterns of the pattern layer 3 in plan view.

In order to adjust the thickness of the surface protective layer 5, the amount of coating may be adjusted when performing the printing methods or the coating methods mentioned above. Specifically, in these printing methods or coating methods, two base materials (primary film layers) with and without a surface protective layer may be formed, so that the amount of coating can be calculated from the mass difference therebetween.

The surface protective layer 5 comprises an ionizing radiation curable resin as a main material. The term main material refers to the material being contained preferably at 60 parts by mass or more, more preferably 70 parts by mass or more, and most preferably 80 parts by mass or more, relative to 100 parts by mass of the surface protective layer. The ionizing radiation curable resin constituting the surface protective layer 5 may be any known resin, such as various monomers or commercially available oligomers, examples thereof include (meth)acrylic resins, silicone resins, polyester resins, urethane resins, amide resins, and epoxy resins. The ionizing radiation curable resin may be either an aqueous resin or non-aqueous (organic solvent-based) resin.

The ionizing radiation curable resin constituting the surface protective layer 5 comprises a trifunctional acrylate resin with a repeating structure as a main component. Examples of the trifunctional acrylate resin (acrylic resin) include trimethylolpropane triacrylate, glycerin triacrylate, isocyanurate triacrylate, and pentaerythritol triacrylate.

The term main component refers to the material being contained preferably at 60 parts by mass or more, more preferably 70 parts by mass or more, and most preferably 80 parts by mass or more, relative to 100 parts by mass of the resin composition. Use of bifunctional acrylate resins is not preferred because the degree of cross-linking may be insufficient and scratch resistance may be reduced. Use of tetrafunctional or higher acrylate resins is not preferred because the degree of cross-linking may become excessively high, resulting in deteriorating processability.

If gravure printing is used as the coating method, the ionizing radiation curable resin is preferred to have a viscosity in the range of 10 mPa·s or more and 500 mPa·s or less, but the optimal range of viscosity is 50 mPa·s or more and 300 mPa·s or less. Therefore, use of trimethylolpropane triacrylate or glycerin triacrylate as the trifunctional acrylate resin is preferred because the viscosity can be in the preferred range or optimal range. Use of resins with skeletons inducing hydrogen bonds or $\pi$-$\pi$ stacking is not preferred because most of these resins have a high viscosity of 500 mPa·s or more. For viscosity adjustment, organic solvents or low-viscosity bifunctional acrylate resins may be added. However, from the perspective of environmental impact, it is preferred that organic solvents are not used. Use of bifunctional acrylate resins is not preferred because scratch resistance may be deteriorated if excessively added. Therefore, if a bifunctional acrylate resin is used being added to a trifunctional acrylate resin, the content of the bifunctional acrylate resin is preferred to be in the range of 10 mass% or more and 30 mass% or less, and more preferred to be in the range of 15 mass% or more and 20 mass% or less, relative to the content (mass) of the trifunctional acrylate resin.

The repeating structure mentioned above is preferred to be any of an ethylene oxide (EO) structure, propylene oxide (PO) structure, and ε-caprolactone (CL) structure. It is more preferred that the repeating structure is an ethylene oxide or propylene oxide structure. The ethylene oxide, propylene oxide, and ε-caprolactone structures are preferred because, in these structures, the molecules are freely rotatable and highly flexible, and thus are easily folded by light with a wavelength of 200 nm or less, so that fine asperities are easily formed. It should be noted that the number of repetitions of the repeating structure is 3 or more. The number of repetitions is more preferred to be 3 or more and 30 or less, and is most preferred to be 3 or more and 20 or less. If vacuum UV light (VUV light) is applied in the case of the number of repetitions being 2 or less, sufficient shrinkage is not necessarily achieved in the ionizing radiation curable resin constituting the surface protective layer 5, not achieving low gloss in the surface protective layer 5. If the number of repetitions is greater than 30, the cross-linking density is reduced, deteriorating scratch resistance of the surface protective layer 5.

The number of repetitions of the above repeating structures can be analyzed using MALDI-TOF-MS. The ionizing radiation curable resin constituting the surface protective layer 5 may have a molecular weight distribution. If there is a molecular weight distribution, the number of repetitions is set to the number of repetitions corresponding to the molecular weight having the most intense peak in the MALDI-TOF-MS mass spectrum.

The surface protective layer 5 may contain particles. Addition of particles with most suitable size and most suitable content can form a uniform surface. Examples of the particles include particles of organic materials such as PE wax, PP wax, and resin beads, and particles of inorganic materials such as silica, glass, alumina, titania, zirconia, calcium carbonate, and barium sulfate.

The average size of the particles is preferred to be 10 μm or less. The average size is more preferred to be 1 μm or more and 8 μm or less, even more preferred to be 2 μm or more and 6 μm or less, and most preferred to be 3 μm or more and 5 μm or less. A size greater than 10 μm is not preferred because scratch resistance may be deteriorated due to the particles becoming detached. A size less than 1 μm is not preferred because the effect of making the surface uniform is low.

The added amount of particles is preferred to be 0.5 parts by mass or more and 10 parts by mass or less, relative to 100 parts by mass of the ionizing radiation curable resin. The added amount of particles is more preferred to be 2 parts by mass or more and 8 parts by mass or less, even more preferred to be 2 parts by mass or more and 6 parts by mass or less, and most preferred to be 4 parts by mass or more and 5 parts by mass or less. Containing particles with the added amount mentioned above is preferred because a uniform surface can be formed.

The particle size (average particle size) may be a value obtained by measuring particle size distribution of the particles used, or obtained by actually measuring the particle sizes of a plurality of particles through observation of a cross section of the obtained decorative material and averaging the particle sizes. Although these measurement methods are different from each other, the obtained particle sizes are substantially the same. For example, the average particle size of the particles added to the surface protective layer 5 may be a median diameter (D50) measured using a laser diffraction/scattering type particle size distribution analyzer.

When curing the entire surface protective layer 5 using UV light, a photoinitiator is required to be added to the surface protective layer 5. The photoinitiator is not specifically limited, but examples thereof may include benzophenone-, acetophenone-, benzoin ether-, and thioxanthone-based photoinitiators.

In order to impart required functions to the surface protective layer 5, functional additives such as antibacterial agents and antifungal agents may be added as desired. As necessary, UV absorbers and photostabilizers may be added to the surface protective layer 5. Generally, for example, benzotriazole-, benzoate-, benzophenone-, and triazine-based UV absorbers are added in any combination, and, for example, hindered amine-based photostabilizers are added in any combination.

Such a decorative sheet 1 will have a gloss of 5.0 or less in spite of not containing a matting agent (matting additive), thereby achieving a decorative sheet with a significantly low gloss. In the conventional decorative sheets, if the gloss of the decorative sheet having a surface protective layer is 8 or less, the content of the matting agent in the surface protective layer may become high and the surface protective layer may suffer from turbidity. Therefore, there has been a risk that the colors and patterns of the colored pattern layer do not appear clearly, and aesthetic properties of the decorative sheet are reduced. Furthermore, if a decorative sheet with a gloss close to zero is to be obtained, the content of the matting agent in the surface protective layer may become even higher, and therefore it may be difficult to form a surface protective layer with a smooth surface without producing streaks, irregularities, etc. thereon.

The decorative sheet 1 can achieve a low gloss of 5.0 or less, while maintaining performance equivalent to that of the decorative sheet having a gloss of 20 or higher. The gloss is measured at an incidence angle of 60 degrees using a gloss meter conforming to JIS Z 8741.

<Concealing Layer 8>

If concealability to the substrate B is desired to be imparted to the decorative sheet 1, a colored sheet may be used as the primary film layer 2, or an opaque concealing layer 8 may be separately provided. The concealing layer 8 may be basically made of the same material as the pattern layer 3; however, since the purpose is concealment, the pigment used is preferred to be, for example, an opaque pigment such as titanium dioxide and iron oxide. Furthermore, in order to improve concealability, metal, such as gold, silver, copper, and aluminum, can be added. In general, flake aluminum is often added.

(Production method)

An example of producing the decorative sheet 1 will be described.

A resin film is used as a primary film layer 2, and a water-resistant protective layer 9 is formed on the upper surface of the primary film layer 2 by printing. Furthermore, a surface protective layer 5 is formed on the water-resistant protective layer by printing. The surface protective layer 5 is formed by applying an ionizing radiation curable resin and irradiating the surface thereof with light having a wavelength of 200 nm or less (first irradiation light) to shrink the surface of the ionizing radiation curable resin. Subsequently, in order to cure the ionizing radiation curable resin after shrinkage, ionizing radiation, or UV light, i.e., the first irradiation light, having a wavelength longer than that of the light having a wavelength of 200 nm or less is applied thereto. Through the above processing, a decorative sheet 1 is formed, including a surface protective layer 5 which is provided with a core portion 5A and ridge portions 5B protruding in a ridge-like shape from one surface (upper surface) of the core portion 5A.

It should be noted that the present embodiment is not limited to the embodiment described above. For example, in order to cure the ionizing radiation curable resin after shrinkage, ionizing radiation, or UV light, i.e., the first irradiation light, having a wavelength longer than that of the light with a wavelength of 200 nm or less may be applied only once. In that case, the integrated intensity of the light, i.e., the first irradiation light, having a wavelength of 200 nm or less may be 0.5 mJ/cm$^2$ or more and 200 mJ/cm$^2$ or less.

(Effects and others)

The decorative sheet 1 according to the present embodiment includes a surface protective layer 5 with a surface on which asperities are formed. With this configuration, gloss (glossiness) of the surface protective layer can be adjusted without adding a matting agent (matting additive) to the surface protective layer. Matting agents reduce oil repellency of layers made of resin materials, and therefore fingerprints are more likely to adhere thereto. Due to containing no matting agent, the surface protective layer 5 of the present embodiment does not absorb oil to relatively improve oil repellency.

Therefore, in various situations, such as during on-site construction, during furniture assembly, and during residents' daily lives, fingerprints are less likely to adhere to the decorative sheet 1 having the surface protective layer 5.

According to the configuration of the surface protective layer 5 with a surface on which asperities are formed, oil repellency of the surface protective layer 5 is improved to thereby suppress adhesion of oil stains and adsorption of contaminant onto the surface of the decorative sheet 1.

According to the configuration of the surface protective layer 5 containing no matting agent, no particles of the matting agent become detached when the surface of the decorative sheet 1 is scratched, so that gloss changes or scratches are less likely to be caused on the surface of the decorative sheet 1.

In the present embodiment, the surface protective layer 5 has been formed of a single layer; however, the configuration is not limited to this. For example, the surface protective layer 5 may be constituted of multiple layers. In other words, the surface protective layer 5 may be formed by laminating a plurality of layers made of the same ionizing radiation curable resin, or by laminating a plurality of layers made of different ionizing radiation curable resins, with asperities formed on the surface. If a plurality of layers made of different ionizing radiation curable resins are laminated, the outermost layer of the surface protective layer 5 may comprise, for example, an ionizing radiation curable resin as a main material, and the ionizing radiation curable resin may comprise a trifunctional acrylic resin with a repeating structure as a main component, the repeating structure is preferred to be any of ethylene oxide, propylene oxide, and ε-caprolactone structures, with the number of repetitions of the structure being 3 or more, and the layer on the primary film layer 2 side of the surface protective layer 5 (i.e., the layer under the outermost layer of the surface protective layer 5) is not specifically limited.

Examples

[Examples]

Examples based on the present invention will be described below.

<Example 1>

An olefin film with a thickness of 55 μm (manufactured by Riken Technos Corp.) was used as a primary film layer. One surface of the primary film layer was corona-treated, and the following water-resistant protective layer coating liquid was applied to the corona-treated surface. After that, the water-resistant protective layer coating liquid was dried and cured to form a water-resistant protective layer 9. Subsequently, the following surface protective layer coating liquid was applied to the upper surface of the water-resistant protective layer 9. The surface protective layer coating liquid had a thickness of 5 μm. After that, an Xe excimer lamp with a wavelength of 172 nm was applied to the surface of the surface protective layer coating liquid so that the integrated light intensity would be 100 mJ/cm$^2$. Subsequently, ionizing radiation was applied at a dose of 100 kGy and the surface protective layer coating liquid was cured to form a surface protective layer 5, thereby obtaining a decorative sheet of Example 1 with a total thickness of 60 μm.

(Water-resistant protective layer coating liquid>

The water-resistant protective layer coating liquid was composed by blending the following curing component into the following aqueous emulsion resin.

Aqueous emulsion resin

Type: Acrylic resin

Product name: SETAQUA 6776 (manufactured by Allnex)

Formulation: 100 parts by weight

Curing component

Type: Epoxy resin

Product name: EX-810 (manufactured by Nagase ChemteX Corporation)

Formulation: 5 parts by weight

(Surface protective layer coating liquid>

The surface protective layer coating liquid was composed by blending the following particles into the following ionizing radiation curable resin.

Ionizing radiation curable resin

Type: Trimethylolpropane EO-modified triacrylate (6 moles of EO added)

Product name: Miramer M3160 (manufactured by Miwon)

Formulation: 100 parts by mass

Particles

Product Name: SYLYSIA 250N (manufactured by Fuji Silysia Chemical Ltd.)

Particle size: 5 $\mu$m

Formulation: 0.5 parts by mass

<Example 2>

A decorative sheet of Example 2 was obtained in the same manner as in Example 1, except that the ionizing radiation curable resin contained in the surface protective layer coating liquid of Example 1 was replaced by the following resin.

Ionizing radiation curable resin

Type: Trimethylolpropane EO-modified triacrylate (15 moles of EO added)

Product name: SR9035 (manufactured by Sartomer)

<Example 3>

A decorative sheet of Example 3 was obtained in the same manner as in Example 1, except that the ionizing radiation curable resin contained in the surface protective layer coating liquid of Example 1 was replaced by the following resin.

Ionizing radiation curable resin

Type: Trimethylolpropane EO-modified triacrylate (3 moles of EO added)

Product name: Miramer M3130 (manufactured by Miwon)

<Example 4>

A decorative sheet of Example 4 was obtained in the same manner as in Example 1, except that the ionizing radiation curable resin contained in the surface protective layer coating liquid of Example 1 was replaced by the following resin.

Ionizing radiation curable resin

Type: Trimethylolpropane PO-modified triacrylate (6 moles of PO added)

Product name: NK ester A-TMPT-6PO (manufactured by Shin-Nakamura Chemical Co., Ltd.)

<Example 5>

A decorative sheet of Example 5 was obtained in the same manner as in Example 1, except that the ionizing radiation curable resin contained in the surface protective layer coating liquid of Example 1 was replaced by the following resin.
Ionizing radiation curable resin

Type: Caprolactone-modified tris-(2-acryloxyethyl)isocyanurate (3 moles of caprolactone (CL) added)

Product name: NK ester A-9300-3CL (manufactured by Shin-Nakamura Chemical Co., Ltd.)

<Example 6>

A decorative sheet of Example 6 with a total thickness of 56 μm was obtained in the same manner as in Example 1, except that the thickness of the layer of the surface protective layer coating liquid of Example 1 was changed to 1 μm.

<Example 7>

A decorative sheet of Example 7 with a total thickness of 57 μm was obtained in the same manner as in Example 1, except that the thickness of the layer of the surface protective layer coating liquid of Example 1 was 2 μm.

<Example 8>

A decorative sheet of Example 8 with a total thickness of 75 μm was obtained in the same manner as in Example 1, except that the thickness of the layer of the surface protective layer coating liquid of Example 1 was changed to 20 μm.

<Example 9>

A decorative sheet of Example 9 with a total thickness of 80 μm was obtained in the same manner as in Example 1, except that the thickness of the layer of the surface protective layer coating liquid of Example 1 was changed to 25 μm.

<Example 10>

A decorative sheet of Example 10 was obtained in the same manner as in Example 9, except that the particles of Example 9 were not added.

<Example 11>

A decorative sheet of Example 11 was obtained in the same manner as in Example 3, except that the particles of Example 3 were not added.

<Example 12>

A decorative sheet of Example 12 was obtained in the same manner as in Example 1, except that the particles of Example 1 were replaced by the following particles.
Particles

Product Name: SYLYSIA 450 (manufactured by Fuji Silysia Chemical Ltd.)

Particle size: 8.0 μm

Formulation: 0.5 parts by mass

<Example 13>

A decorative sheet of Example 13 was obtained in the same manner as in Example 1, except that the particles of Example 1 were replaced by the following particles.
Particles

Product Name: SYLYSIA 780 (manufactured by Fuji Silysia Chemical Ltd.)

Particle size: 11.3 μm

Formulation: 0.5 parts by mass

<Example 14>

A decorative sheet of Example 14 was obtained in the same manner as in Example 1, except that the amount of blending of the particles of Example 1 was changed to 10 parts by mass.

<Example 15>

A decorative sheet of Example 15 was obtained in the same manner as in Example 1, except that the amount of blending of the particles of Example 1 was changed to 11 parts by mass.

<Example 16>

A decorative sheet of Example 16 with a total thickness of 56 $\mu$m was obtained in the same manner as in Example 1, except that the thickness of the layer of the surface protective layer coating liquid of Example 1 was 1 $\mu$m and no particles were added.

<Example 17>

A decorative sheet of Example 17 was obtained in the same manner as in Example 1, except that the thickness of the water-resistant protective layer of Example 1 was changed to 1 $\mu$m.

<Example 18>

A decorative sheet of Example 18 was obtained in the same manner as in Example 1, except that the ionizing radiation curable resin of Example 1 was replaced by the following resin and the thickness was changed to 25 $\mu$m.
Ionizing radiation curable resin
Type: Trimethylolpropane EO-modified triacrylate (50 moles of EO added)

[Comparative Examples]

<Comparative Example 1>

A decorative sheet of Comparative Example 1 was obtained in the same manner as in Example 1, except that no processing was performed for applying an Xe excimer lamp to the surface of the surface protective layer coating liquid of Example 1, and the amount of the particles added was changed to 15 parts by mass.

<Comparative Example 2>

A decorative sheet of Comparative Example 2 was obtained in the same manner as in Example 1, except that the ionizing radiation curable resin contained in the surface protective layer coating liquid of Example 1 was replaced by the following resin.
Ionizing radiation curable resin

Type: Ethylene glycol diacrylate (9 moles of EO added)

Product name: Light Acrylate 9EG-A (manufactured by Kyoeisha Chemical Co., Ltd.)

<Comparative Example 3>

A decorative sheet of Comparative Example 3 was obtained in the same manner as in Example 1, except that the ionizing radiation curable resin contained in the surface protective layer coating liquid of Example 1 was replaced by the following resin.
Ionizing radiation curable resin

Type: Pentaerythritol tetraacrylate (35 moles of EO added)

Product name: NK Ester A-TM-35E (manufactured by Shin-Nakamura Chemical Co., Ltd.)

<Comparative Example 4>

A decorative sheet of Comparative Example 4 was obtained in the same manner as in Example 1, except that the ionizing radiation curable resin contained in the surface protective layer coating liquid of Example 1 was replaced by the following resin.
Ionizing radiation curable resin

Type: Trimethylolpropane triacrylate

Product name: NK Ester A-TMPT (manufactured by Shin-Nakamura Chemical Co., Ltd.)

<Comparative Example 5>

A decorative sheet of Comparative Example 5 was obtained in the same manner as in Example 1, except that no water-resistant protective layer of Example 1 was provided.

<Comparative Example 6>

A decorative sheet of Comparative Example 6 was obtained in the same manner as in Example 1, except that the ionizing radiation curable resin of Example 1 was replaced by the following resin, and the thickness was changed to 20 $\mu$m.
Ionizing radiation curable resin
Type: Trimethylolpropane EO-modified triacrylate (60 moles of EO added)

[Evaluation]

The decorative sheets of Examples 1 to 18 and Comparative Examples 1 to 6 obtained through the above methods were evaluated.
If the examples or the comparative examples were evaluated to be Good or Fair, they were regarded to be above the pass level because there would be no problem in actual use.

<Surface conditions>

For surface conditions, uniformity of the surface was evaluated visually.
The evaluation criteria were as follows.

Good: The surface was uniform.

Fair: Part of the surface was uneven.

Poor: The entire surface was uneven.

<Gloss>

Gloss was measured at an incidence angle of 60 degrees using Rhopoint IQ (manufactured by Konica Minolta Co., Ltd.)

If the gloss was 15 or lower, the gloss could be visually regarded as being sufficiently low, and therefore the examples or comparative examples with a gloss of 15 or lower were taken to be above the pass level.

<Fingerprint resistance: evaluation of wipeability>

To evaluate fingerprint resistance, fingerprint wipeability was evaluated.
The gloss at 60 degrees was measured for the surface of each of the decorative sheets, and the gloss was taken to be an initial gloss. Subsequently, a fingerprint resistance evaluation liquid was adhered to each surface protective layer, and then the fingerprint resistance evaluation liquid adhered to the surface of the decorative sheet was wiped off. After that, the 60-degree gloss at the portion from which the fingerprint resistance evaluation liquid had been wiped off was measured and the measured value was taken to be a gloss after wiping. A higher fatty acid was used as the fingerprint resistance evaluation liquid.

A fingerprint wiping rate was calculated as follows.

$$\text{Fingerprint wiping rate (\%)} = (\text{Gloss after wiping} / \text{Initial gloss}) \times 100$$

The evaluation criteria were as follows.

Good: The wiping rate was 70% or more and less than 250%.

Fair: The wiping rate was 50% or more and less than 70%, or 250% or more and less than 300%.

Poor: The wiping rate was less than 50%, or 300% or more.

<Stain resistance>

To evaluate stain resistance, 10 mm-wide lines were drawn on each decorative sheet using blue ink, black quick-drying ink, and red crayon, and left to stand for 4 hours, after which these lines were wiped off with a cloth soaked in ethanol, according to the stain A test specified in the Japanese Agricultural Standards (JAS), for evaluation of resistance to ink stains.

The evaluation criteria were as follows.

Good: Colored lines could all be easily wiped off.

Fair: Part of colored lines could be wiped off but part of them remained as stains.

Poor: None of colored lines could be wiped off.

<Scratch resistance test: Steel wool rubbing testing>

To evaluate scratch resistance, each of the obtained decorative sheets was bonded to a wood substrate B using a urethane adhesive, and subjected to steel wool rubbing testing. With a load of 100 g imposed, steel wool was reciprocated 20 times on the decorative sheet for rubbing, and scratches and gloss changes caused on the surface of the sheet were visually examined.

The evaluation criteria were as follows.

Good: No scratches or gloss changes were observed on the surface.

Fair: Slight scratches or gloss changes were observed on the surface.

Poor: Significant scratches or gloss changes were observed on the surface.

<Bending formability testing>

Each of the obtained decorative sheets was bonded to a wood substrate B using a urethane adhesive so that the primary film layer-side surface (i.e., the rear surface of the decorative sheet) would face the wood substrate B, followed by forming a V-shaped groove to the depth of the boundary where the wood substrate B and the decorative sheet 1 were bonded together, so that the decorative sheet would not be scratched.

Next, to evaluate bending formability, the wood substrate B was bent to 90 degrees along the V-shaped groove so that the surface protective layer-side surface of the decorative sheet (i.e., the front surface of the decorative sheet) would be mountain-folded, and the bent portion of the surface of the decorative sheet was observed with an optical microscope to examine the occurrence of whitening or cracking.

The evaluation criteria were as follows.

Good: No whitening or cracking was observed.
Fair: Whitening was observed partly.
Poor: Whitening was observed on the entire surface, or cracking was observed partly.

<Water resistance testing>

About 1 ml of water was dropped onto each of the obtained decorative sheets, the sheet was covered with a watch glass, and the water was wiped off after the lapse of 1 hour to visually examine gloss changes occurring on the surface of the decorative sheet.

The evaluation criteria were as follows.

Good: No gloss changes were observed.
Fair: Slight gloss changes were observed on the surface.
Poor: Significant gloss changes were observed on the surface.

The evaluation results are shown in Tables 1 and 2.

[Table 1]

| | | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|---|
| Water-resistant protective layer | Resin component | Type | Acrylic | Acrylic | Acrylic | Acrylic | Acrylic | Acrylic | Acrylic | Acrylic | Acrylic | Acrylic |
| | Curing component | Type | Epoxy | Epoxy | Epoxy | Epoxy | Epoxy | Epoxy | Epoxy | Epoxy | Epoxy | Epoxy |
| | Thickness ($\mu$m) | | 5 | 5 | 5 | 5 | 5 | 5 | 5 | 5 | 5 | 5 |
| Surface protective layer | Surface configuration | | Ridged | Ridged | Ridged | Ridged | Ridged | Ridged | Ridged | Ridged | Ridged | Ridged |
| | RSm/Ra | | 120 | 100 | 200 | 120 | 120 | 300 | 200 | 80 | 50 | 50 |
| | Thickness ($\mu$m) | | 5 | 5 | 5 | 5 | 5 | 1 | 2 | 20 | 25 | 25 |
| | Acrylic resin | No. of functional groups | 3 | 3 | 3 | 3 | 3 | 3 | 3 | 3 | 3 | 3 |
| | | Repeating structure — Structure | $C_2H_4O$ | $C_2H_4O$ | $C_2H_4O$ | $C_3H_6O$ | $C_6H_{10}O_2$ | $C_2H_4O$ | $C_2H_4O$ | $C_2H_4O$ | $C_2H_4O$ | $C_2H_4O$ |
| | | Repeating structure — No. of repetitions | 6 | 15 | 3 | 6 | 3 | 6 | 6 | 6 | 6 | 6 |
| | Additive | Particle size ($\mu$m) | 5 | 5 | 5 | 5 | 5 | 5 | 5 | 5 | 5 | None |
| | | Added amount (parts by mass) | 0.5 | 0.5 | 0.5 | 0.5 | 0.5 | 0.5 | 0.5 | 0.5 | 0.5 | - |
| Surface conditions | | | Good | Good | Good | Good | Good | Good | Good | Good | Good | Good |
| Gloss at 60° | | | 3 | 2 | 5 | 3 | 10 | 8 | 5 | 2 | 1.5 | 3 |
| Fingerprint resistance | | | Good | Good | Good | Good | Good | Good | Good | Good | Good | Good |
| Stain resistance | | Stain A | Good | Good | Good | Good | Good | Good | Good | Good | Good | Good |
| Scratch resistance | | Steel | Good | Good | Good | Good | Good | Fair | Good | Good | Good | Good |
| Processability | | V cut | Good | Good | Good | Good | Good | Good | Good | Good | Fair | Fair |
| Water resistance | | Gloss changes | Good | Good | Good | Good | Good | Good | Good | Good | Good | Good |

EP 4 559 675 A1

| | | | Ex. 11 | Ex. 12 | Ex. 13 | Ex. 14 | Ex. 15 | Ex. 16 | Ex. 17 | Ex. 18 |
|---|---|---|---|---|---|---|---|---|---|---|
| Water-resistant protective layer | Resin component | Type | Acrylic | Acrylic | Acrylic | Acrylic | Acrylic | Acrylic | Acrylic | Acrylic |
| | Curing component | Type | Epoxy | Epoxy | Epoxy | Epoxy | Epoxy | Epoxy | Epoxy | Epoxy |
| | Thickness ($\mu$m) | | 5 | 5 | 5 | 5 | 5 | 5 | 1 | 5 |
| Surface protective layer | Surface configuration | | Ridged | Ridged | Ridged | Ridged | Ridged | Ridged | Ridged | Ridged |
| | RSm/Ra | | 250 | 120 | 120 | 140 | 120 | 300 | 120 | 10 |
| | Thickness ($\mu$m) | | 5 | 5 | 5 | 5 | 5 | 1 | 5 | 25 |
| | Acrylic resin | No. of functional groups | 3 | 3 | 3 | 3 | 3 | 3 | 3 | 3 |
| | | Repeating structure — Structure | $C_2H_4O$ | $C_2H_4O$ | $C_2H_4O$ | $C_2H_4O$ | $C_2H_4O$ | $C_2H_4O$ | $C_2H_4O$ | $C_2H_4O$ |
| | | Repeating structure — No. of repetitions | 3 | 6 | 6 | 6 | 6 | 6 | 6 | 50 |
| | Additive | Particle size ($\mu$m) | None | 8 | 11 | 5 | 5 | None | 5 | 5 |
| | | Added amount (parts by mass) | - | 0.5 | 0.5 | 10 | 11 | - | 0.5 | 0.5 |
| Surface conditions | | | Fair | Good | Good | Good | Good | Fair | Good | Good |
| Gloss at 60° | | | 7 | 3 | 3 | 3 | 3 | 10 | 3 | 1 |
| Fingerprint resistance | | | Good | Good | Fair | Good | Fair | Good | Good | Good |
| Stain resistance | | Stain A | Good | Good | Fair | Good | Fair | Good | Good | Good |
| Scratch resistance | | Steel | Good | Good | Fair | Good | Fair | Fair | Good | Fair |
| Processability | | V cut | Good | Good | Fair | Good | Fair | Good | Good | Fair |
| Water resistance | | Gloss changes | Good | Good | Good | Good | Good | Good | Fair | Good |

EP 4 559 675 A1

[Table 2]

| | | | | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|
| Water-resistant protective layer | Resin component | Type | | Acrylic | Acrylic | Acrylic | Acrylic | None | Acrylic |
| | Curing component | Type | | Epoxy | Epoxy | Epoxy | Epoxy | None | Epoxy |
| | Thickness ($\mu$m) | | | 5 | 5 | 5 | 5 | - | 5 |
| Surface protective layer | Surface configuration | | | Asperities due to particles | Ridged | Ridged | Ridged | Ridged | Ridged |
| | RSm/Ra | | | 400 | 100 | 300 | 4,000 | 120 | 8 |
| | Thickness ($\mu$m) | | | 5 | 5 | 5 | 5 | 5 | 20 |
| | Acrylic resin | No. of functional groups | | 3 | 2 | 4 | 3 | 3 | 3 |
| | | Repeating structure | Structure | $C_2H_4O$ | $C_2H_4O$ | $C_2H_4O$ | None | $C_2H_4O$ | $C_2H_4O$ |
| | | | No. of repetitions | 6 | 9 | 35 | 0 | 6 | 60 |
| | Additive | Particle size ($\mu$m) | | 5 | 5 | 5 | 5 | 5 | 5 |
| | | Added amount (parts by mass) | | 15 | 0.5 | 0.5 | 0.5 | 0.5 | 0.5 |
| Surface conditions | | | | Good | Good | Good | Good | Good | Good |
| Gloss at 60° | | | | 10 | 3 | 5 | 90 | 3 | 0.8 |
| Fingerprint resistance | | | | Poor | Good | Good | Poor | Good | Good |
| Stain resistance | | Stain A | | Poor | Good | Good | Good | Good | Fair |
| Scratch resistance | | Steel | | Poor | Poor | Good | Good | Good | Poor |
| Processability | | V cut | | Good | Good | Poor | Good | Good | Fair |
| Water resistance | | Gloss changes | | Good | Good | Good | Good | Poor | Good |

As shown in Table 1, Examples 1 to 18 can provide decorative sheets exhibiting low gloss, while having good fingerprint resistance, scratch resistance, stain resistance, bending formability, and water resistance. Further performance improvement can be achieved by optimizing the thickness of the surface protective layer, or the size and added amount of the particles to be blended, besides optimizing the surface configuration and resin composition of the surface protective layer.

For example, the present invention can have the following configurations.

(1) A decorative sheet, wherein

a primary film layer, a water-resistant protective layer, and a surface protective layer are laminated in this order;

the surface protective layer has a surface on which asperities having ridge portions protruding in a ridge-like shape are formed;

in the asperities of the surface protective layer, a ratio RSm/Ra between a surface roughness index RSm and a surface roughness index Ra is in a range of 10 or more and 300 or less;

the surface protective layer comprises an ionizing radiation curable resin as a main material;

the ionizing radiation curable resin comprises a trifunctional acrylic resin with a repeating structure as a main component; and

the number of repetitions of the repeating structure is 3 or greater.

(2) The decorative sheet according to (1), wherein
resin components composing the water-resistant protective layer comprise a thermosetting resin as a main material; and
the thermosetting resin comprises a resin with a cross-linked structure which is formed of a coating liquid containing an acrylic resin as a resin component and an epoxy compound as a curing component.

(3) The decorative sheet according to (1) or (2), wherein the repeating structure is any of ethylene oxide, propylene oxide, and $\varepsilon$-caprolactone structures.

(4) The decorative sheet according to any one of (1) to (3), wherein the surface protective layer has a thickness in a range of 2 $\mu$m or more and 20 $\mu$m or less.

(5) The decorative sheet according to any one of (1) to (4), wherein the water-resistant protective layer has a thickness in a range of 2 $\mu$m or more and 10 $\mu$m or less.

(6) The decorative sheet according to any one of (1) to (5), wherein the surface protective layer comprises particles having an average particle size of 10 $\mu$m or less.

(7) The decorative sheet according to (6), wherein an added amount of the particles is 0.5 parts by mass or more and 10 parts by mass or less relative to 100 parts by mass of the ionizing radiation curable resin.

(8) The decorative sheet according to any one of (1) to (7), wherein the surface protective layer has a gloss of 5.0 or less.

(9) The decorative sheet according to any one of (1) to (8), wherein

the surface protective layer comprises a core portion and the ridge portions formed on the core portion; and

a ratio between a thickness of the ridge portions and a thickness of the core portion (thickness of ridge portions / thickness of core portion) is in a range of 0.01 or more and 2.0 or less.

(10) The decorative sheet according to (9), wherein a ratio between the thickness of the ridge portions and the thickness of the core portion (thickness of ridge portions / thickness of core portion) is in a range of 0.1 or more and 1.0 or less.

(11) The decorative sheet according to any one of (1) to (10), wherein the ratio RSm/Ra of the asperities of the surface protective layer is in a range of 80 or more and 150 or less.

(12) The decorative sheet according to any one of (1) to (11), wherein a cross section of the ridge portions taken along a thickness direction of the surface protective layer has a sinusoidal shape.

(13) The decorative sheet according to any one of (1) to (12), wherein the trifunctional acrylic resin is a resin comprising glycerin triacrylate, isocyanurate triacrylate, or pentaerythritol triacrylate.

(14) A method of producing the decorative sheet according to any one of (1) to (13), wherein
a surface protective layer having ridge portions protruding in a ridge-like shape is formed by:
irradiating a surface of an applied ionizing radiation curable resin with light having a wavelength of 200 nm or less, and then irradiating the surface with ionizing radiation or UV light having a wavelength longer than that of the light having a wavelength of 200 nm or less.

(15) The method of producing a decorative sheet according to (14), wherein the light having a wavelength of 200 nm or less is light having a wavelength of 172 nm.

(16) The method of producing a decorative sheet according to (14) or (15), wherein

the surface protective layer having the ridge portions is formed by irradiating a surface of the ionizing radiation curable resin with light having a wavelength of 200 nm or less, and then irradiating, only once, the surface with ionizing radiation or UV light having a wavelength longer than that of the light having a wavelength of 200 nm or less; and
an integrated intensity of the light having a wavelength of 200 nm or less is set to a range of 0.15 mJ/cm$^2$ or more and 200 mJ/cm$^2$ or less.

(17) The method of producing a decorative sheet according to (16), wherein an integrated intensity of the UV light having a wavelength longer than that of the light having a wavelength of 200 nm or less is set to a range of 10 mJ/cm$^2$ or more and 500 mJ/cm$^2$ or less.

(18) The method of producing a decorative sheet according to any one of (14) to (17), wherein
a surface protective layer having the ridge portions protruding in a ridge-like shape is formed by:
irradiating a surface of an applied ionizing radiation curable resin with light having a wavelength of 200 nm or less, and then irradiating the surface with only the ionizing radiation.

(19) The method of producing a decorative sheet according to any one of (14) to (18), wherein
the ionizing radiation curable resin has a viscosity in a range of 10 mPa·s or more and 500 mPa·s or less.

[Reference Signs List]

1    Decorative sheet

2    Primary film layer

3    Pattern layer

4    Transparent resin layer

5    Surface protective layer

6    Primer layer

7    Adhesive layer

8    Concealing layer

9    Water-resistant protective layer

11   Decorative material

B    Substrate

## Claims

1. A decorative sheet, wherein

   a primary film layer, a water-resistant protective layer, and a surface protective layer are laminated in this order;
   the surface protective layer has a surface on which asperities having ridge portions protruding in a ridge-like shape are formed;
   in the asperities of the surface protective layer, a ratio RSm/Ra between a surface roughness index RSm and a surface roughness index Ra is in a range of 10 or more and 300 or less;
   the surface protective layer comprises an ionizing radiation curable resin as a main material;
   the ionizing radiation curable resin comprises a trifunctional acrylic resin with a repeating structure as a main component; and
   the number of repetitions of the repeating structure is 3 or greater.

2. The decorative sheet according to claim 1, wherein

   resin components composing the water-resistant protective layer comprise a thermosetting resin as a main material; and
   the thermosetting resin comprises a resin with a cross-linked structure which is formed of a coating liquid containing an acrylic resin as a resin component and an epoxy compound as a curing component.

3. The decorative sheet according to claim 1 or 2, wherein the repeating structure is any of ethylene oxide, propylene oxide, and ε-caprolactone structures.

4. The decorative sheet according to any one of claims 1 to 3, wherein the surface protective layer has a thickness in a range of 2 μm or more and 20 μm or less.

5. The decorative sheet according to any one of claims 1 to 4, wherein the water-resistant protective layer has a thickness in a range of 2 μm or more and 10 μm or less.

6. The decorative sheet according to any one of claims 1 to 5, wherein the surface protective layer comprises particles having an average particle size of 10 μm or less.

7. The decorative sheet according to claim 6, wherein an added amount of the particles is 0.5 parts by mass or more and 10 parts by mass or less relative to 100 parts by mass of the ionizing radiation curable resin.

8. The decorative sheet according to any one of claims 1 to 7, wherein the surface protective layer has a gloss of 5.0 or less.

9. The decorative sheet according to any one of claims 1 to 8, wherein

   the surface protective layer comprises a core portion and the ridge portions formed on the core portion; and
   a ratio between a thickness of the ridge portions and a thickness of the core portion (thickness of ridge portions / thickness of core portion) is in a range of 0.01 or more and 2.0 or less.

10. The decorative sheet according to claim 9, wherein a ratio between the thickness of the ridge portions and the thickness of the core portion (thickness of ridge portions / thickness of core portion) is in a range of 0.1 or more and 1.0 or less.

11. The decorative sheet according to any one of claims 1 to 10, wherein the ratio RSm/Ra of the asperities of the surface protective layer is in a range of 80 or more and 150 or less.

12. The decorative sheet according to any one of claims 1 to 11, wherein a cross section of the ridge portions taken along a thickness direction of the surface protective layer has a sinusoidal shape.

13. The decorative sheet according to any one of claims 1 to 12, wherein the trifunctional acrylic resin is a resin comprising glycerin triacrylate, isocyanurate triacrylate, or pentaerythritol triacrylate.

14. A method of producing the decorative sheet according to any one of claims 1 to 13, wherein
    a surface protective layer having ridge portions protruding in a ridge-like shape is formed by:
    irradiating a surface of an applied ionizing radiation curable resin with light having a wavelength of 200 nm or less, and then irradiating the surface with ionizing radiation or UV light having a wavelength longer than that of the light having a wavelength of 200 nm or less.

15. The method of producing a decorative sheet according to claim 14, wherein the light having a wavelength of 200 nm or less is light having a wavelength of 172 nm.

16. The method of producing a decorative sheet according to claim 14 or 15, wherein

    the surface protective layer having the ridge portions is formed by irradiating a surface of the ionizing radiation curable resin with light having a wavelength of 200 nm or less, and then irradiating, only once, the surface with ionizing radiation or UV light having a wavelength longer than that of the light having a wavelength of 200 nm or less; and
an integrated intensity of the light having a wavelength of 200 nm or less is set to a range of 0.15 mJ/cm$^2$ or more and 200 mJ/cm$^2$ or less.

17. The method of producing a decorative sheet according to claim 16, wherein an integrated intensity of the UV light having a wavelength longer than that of the light having a wavelength of 200 nm or less is set to a range of 10 mJ/cm$^2$ or more and 500 mJ/cm$^2$ or less.

18. The method of producing a decorative sheet according to any one of claims 14 to 17, wherein
a surface protective layer having the ridge portions protruding in a ridge-like shape is formed by:
irradiating a surface of an applied ionizing radiation curable resin with light having a wavelength of 200 nm or less, and then irradiating the surface with only the ionizing radiation.

19. The method of producing a decorative sheet according to any one of claims 14 to 18, wherein
the ionizing radiation curable resin has a viscosity in a range of 10 mPa·s or more and 500 mPa·s or less.

# FIG.1

# FIG.2

# FIG.3

200 μm

# FIG.4

# FIG.5

# EP 4 559 675 A1

## INTERNATIONAL SEARCH REPORT

International application No.

**PCT/JP2023/026471**

### A. CLASSIFICATION OF SUBJECT MATTER

***B32B 27/00***(2006.01)i; ***B32B 27/30***(2006.01)i; ***E04F 13/07***(2006.01)i; ***E04F 13/18***(2006.01)i
FI:   B32B27/00 E; B32B27/30 A; E04F13/07 B; E04F13/18 A

According to International Patent Classification (IPC) or to both national classification and IPC

### B. FIELDS SEARCHED

Minimum documentation searched (classification system followed by classification symbols)

B32B27/00; B32B27/30; E04F13/07; E04F13/18

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2022/145137 A1 (TOPPAN INC.) 07 July 2022 (2022-07-07)<br>claims, paragraphs [0056]-[0077] | 1-19 |
| Y | JP 2005-119297 A (TOYO KOHAN CO LTD) 12 May 2005 (2005-05-12)<br>paragraphs [0015]-[0018], [0036], fig. 8 | 1-19 |
| Y | JP 2005-187679 A (TOYO INK MFG CO LTD) 14 July 2005 (2005-07-14)<br>claims, table 5 | 2 |

☐ Further documents are listed in the continuation of Box C.  ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 September 2023** | **26 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

28

International application No.

**PCT/JP2023/026471**

| Patent document cited in search report | | | Publication date (day/month/year) | Patent family member(s) | | | Publication date (day/month/year) |
|---|---|---|---|---|---|---|---|
| WO | 2022/145137 | A1 | 07 July 2022 | US | 2023/0025597 | A1 | |
| | | | | claims, paragraphs [0099]-[0199] | | | |
| | | | | EP | 4101640 | A1 | |
| | | | | CN | 115243889 | A | |
| JP | 2005-119297 | A | 12 May 2005 | (Family: none) | | | |
| JP | 2005-187679 | A | 14 July 2005 | KR | 10-2005-0067029 | A | |
| | | | | CN | 1637090 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019119138 A